# EUROPEAN PATENT APPLICATION

(11) **EP 4 624 205 A1**
(43) Date of publication of application: **01.10.2025**
(21) Application number: 24166363.2
(22) Date of filing: 26.03.2024
(51) Int. Cl.: B60H 1/00, B60H 1/03

(54) **VEHICLE AIR CONDITIONING SYSTEM, VEHICLE COMPRISING A VEHICLE AIR CONDITIONING SYSTEM, AND METHOD FOR OPERATING A VEHICLE AIR CONDITIONING SYSTEM**

(71) Applicant: Ningbo Geely Automobile Research & Development Co. Ltd., Hangzhou Bay New District Ningbo 315336 (CN); Zhejiang Geely Holding Group Co., Ltd., Hangzhou, Zhejiang 310051 (CN)
(72) Inventor: NICKLASSON, Kristian, 43955 ÅSA (SE); HENRIKSSON, Lisa, 44298 KODE (SE)
(74) Representative: Zacco Sweden AB

(57) **Abstract**

A vehicle air conditioning system (1). The air conditioning system (1) is treating air that is flowing to a vehicle passenger compartment (C) of a vehicle. The air conditioning system (1) comprises a housing structure (2) extending between an air inlet (I) and the passenger compartment (C). The housing structure (2) is arranged with a first airflow channel (3a) adapted for directing a first airflow (F1) from the air inlet (I) to the passenger compartment (C) and a second airflow channel (3b) adapted for directing a second airflow (F2) from the air inlet (I) to the passenger compartment (C). A first fan unit (6a) configured for establishing the first airflow (F1) is arranged in the first airflow channel (3a), and a second fan unit (6b) configured for establishing the second airflow (F2) is arranged in the second airflow channel (3b). An evaporator (4) configured for cooling the first airflow (F1) is arranged in the first airflow channel (3a) and a condenser (5) configured for heating the second airflow (F2) is arranged in the second airflow channel (3b). The air conditioning system (1) comprises a recirculation airflow channel (7) extending between the passenger compartment (C) and the first airflow channel (3a), and the recirculation airflow channel (7) is adapted for directing a third airflow (F3) from the passenger compartment (C) to the first airflow channel (3a). The air conditioning system (1) comprises an exhaust airflow channel (8) extending between the first airflow channel (3a) and an airflow outlet (8a), and the exhaust airflow channel (8) is adapted for directing a fourth airflow (F4) from the first airflow channel (3a) to the ambient environment (E). The air conditioning system (1) comprises a heat exchanger unit (9) arranged at the housing structure (2) in connection to the air inlet (I) and connected to the exhaust airflow channel (8). The heat exchanger unit (9) is configured for heating an incoming ambient airflow (A_{AI}) into the housing structure (2) at the air inlet (I) by the fourth airflow (F4).

## Description

### TECHNICAL FIELD

The present disclosure relates to a vehicle air conditioning system. The air conditioning system is treating air that is flowing to a vehicle passenger compartment of a vehicle. The air conditioning system comprises a housing structure extending between an air inlet and the passenger compartment. The housing structure is arranged with a first airflow channel adapted for directing a first airflow from the air inlet to the passenger compartment and a second airflow channel adapted for directing a second airflow from the air inlet to the passenger compartment. A first fan unit establishing the first airflow is arranged in the first airflow channel, and a second fan unit establishing the second airflow is arranged in the second airflow channel. An evaporator for cooling the first airflow is arranged in the first airflow channel and a condenser for heating the second airflow is arranged in the second airflow channel. The air conditioning system comprises a recirculation airflow channel extending between the passenger compartment and the first airflow channel, and the recirculation airflow channel is directing a third airflow from the passenger compartment to the first airflow channel. The disclosure further relates to a vehicle comprising a vehicle air conditioning system, and method for operating a vehicle air conditioning system.

### BACKGROUND

Vehicle air conditioning systems with heat exchangers are commonly used in automotive climate system applications. The air conditioning systems are providing climate comfort to the driver and passengers in the passenger compartment of the vehicle, and air conditioning systems are improving the riding experience and the comfort for the driver and the passengers. Today's modern vehicle air conditioning systems are offering many different climate options, and when hot air is generated by the system to the passenger compartment, cold air needs to be dumped to the ambient environment. In the opposite way, when cold air is generated by the system to the passenger compartment, hot air needs to be dumped to the ambient environment. To establish the different climate options and the possibility to dump air to the ambient environment, the vehicle air conditioning systems are complex in construction and involve a high number of components, such as for example heat exchangers, refrigerant circuits with different components, fan units, filters, and door units. The door units are used for controlling the different airflows of the vehicle air conditioning systems.

One issue with modern vehicle air conditioning systems is the problem in cold weather conditions, when hot air is generated by the system to the passenger compartment and cold air needs to be dumped to the ambient environment, the energy consumption of the system is high. Another issue in cold weather conditions when air is recirculated in the vehicle air conditioning system is the problem with fogging up on the inside of the windshield.

There is thus a need for an improved vehicle air conditioning system configuration, and method for operating the air conditioning system, where the system is energy efficient and prevents fogging.

### SUMMARY

An object of the present disclosure is to provide a vehicle air conditioning system, a vehicle comprising a vehicle air conditioning system, and a method for operating a vehicle air conditioning system, where the previously mentioned problems are avoided. This object is at least partly achieved by the features of the independent claims. The dependent claims contain further developments of the vehicle air conditioning system, the vehicle comprising a vehicle air conditioning system, and the method for operating a vehicle air conditioning system.

The disclosure concerns a vehicle air conditioning system. The air conditioning system is treating air that is flowing to a vehicle passenger compartment of a vehicle. The air conditioning system comprises a housing structure extending between an air inlet and the passenger compartment. The housing structure is arranged with a first airflow channel adapted for directing a first airflow from the air inlet to the passenger compartment and a second airflow channel adapted for directing a second airflow from the air inlet to the passenger compartment. A first fan unit configured for establishing the first airflow is arranged in the first airflow channel, and a second fan unit configured for establishing the second airflow is arranged in the second airflow channel. An evaporator configured for cooling the first airflow is arranged in the first airflow channel and a condenser configured for heating the second airflow is arranged in the second airflow channel. The air conditioning system comprises a recirculation airflow channel extending between the passenger compartment and the first airflow channel, and the recirculation airflow channel is adapted for directing a third airflow from the passenger compartment to the first airflow channel. The air conditioning system comprises an exhaust airflow channel extending between the first airflow channel and an airflow outlet, and the exhaust airflow channel is adapted for directing a fourth airflow from the first airflow channel to the ambient environment. The air conditioning system comprises a heat exchanger unit arranged at the housing structure in connection to the air inlet and connected to the exhaust airflow channel. The heat exchanger unit is configured for heating an incoming ambient airflow into the housing structure at the air inlet by the fourth airflow.

Advantages with these features are that instead of dumping cold air from the first airflow channel, this cold air can be used for heating the incoming ambient airflow into the housing structure in the heat exchanger unit at the air inlet by the fourth airflow in the exhaust airflow channel, when the temperature of the incoming ambient air is lower than the cold air in the first airflow channel. This is an efficient way to make the air conditioning system more energy efficient during cold ambient temperatures, such as in cold winter conditions. By recirculating air in the recirculation airflow channel from the passenger compartment to the first airflow channel, this heated recirculated air can be directed to the exhaust airflow channel for heating the incoming ambient airflow in the heat exchanger unit. This is also enabling fresh dry air from the ambient environment to enter the passenger compartment during recycling the air. By heating the incoming ambient airflow, the energy consumption can be lowered, and the heated incoming ambient airflow is reducing the problem with fogging on the inside of the windshield. The evaporator is arranged as a heat exchanger in the first airflow channel, and the condenser is arranged as a heat exchanger in the second airflow channel.

In one embodiment, the first airflow channel comprises an exhaust flow outlet arranged downstream the evaporator. The exhaust flow outlet is connected to the exhaust airflow channel, and the exhaust flow outlet is configured for directing at least a part of the first airflow in the first airflow channel to the exhaust airflow channel for establishing the fourth airflow. The exhaust flow outlet is directing air from the first airflow channel into the exhaust airflow channel for efficiently establishing the fourth airflow.

In one embodiment, the exhaust flow outlet comprises an exhaust door unit configured for controlling the airflow from the first airflow channel to the exhaust airflow channel. The exhaust door unit is used for controlling the fourth airflow in the exhaust airflow channel. The exhaust door unit may have any suitable airflow control door or valve configuration, such as for example a butterfly valve, a gate valve, or a flap actuator.

In one embodiment, the first airflow channel comprises a first outlet flow port arranged downstream the evaporator. The first outlet flow port is configured for directing at least a part of the first airflow to the ambient environment. The first outlet flow port is used for efficiently dumping air from the first airflow channel to the ambient environment.

In one embodiment, the first outlet flow port comprises a first door unit configured for controlling the airflow from the first airflow channel to the ambient environment. The first door unit is used for controlling the amount of air to be dumped from the first airflow channel to the ambient environment. The first door unit may have any suitable airflow control door or valve configuration, such as for example a butterfly valve, a gate valve, or a flap actuator.

In one embodiment, the exhaust flow outlet and the first outlet flow port are arranged in connection to each other in the first airflow channel.

In one embodiment, the second airflow channel comprises a second outlet flow port arranged downstream the condenser. The second outlet flow port is configured for directing at least a part of the second airflow to the ambient environment. The second outlet flow port is used for efficiently dumping air from the second airflow channel to the ambient environment.

In one embodiment, the second outlet flow port comprises a second door unit configured for controlling the airflow from the second airflow channel to the ambient environment. The second door unit is used for controlling the amount of air to be dumped from the second airflow channel to the ambient environment. The second door unit may have any suitable airflow control door or valve configuration, such as for example a butterfly valve, a gate valve, or a flap actuator.

In one embodiment, the air conditioning system further comprises a refrigerant circuit. The evaporator and the condenser are integrated into the refrigerant circuit, and the refrigerant circuit further comprises a compressor and an expansion valve. The refrigerant circuit is controlling the operation of the evaporator and the condenser. The refrigerant circuit is providing temperature control of the airflows of the air conditioning system, and when varying the output in the evaporator and the condenser, the air conditioning system temperatures can be efficiently controlled.

In one embodiment, the air inlet is arranged as an air inlet section of the housing structure common for the first airflow channel and the second airflow channel. The air inlet is configured for receiving the incoming ambient airflow from the ambient environment. By arranging the air inlet as an air inlet section of the housing structure common for the first airflow channel and the second airflow channel, the ambient airflow can be simultaneously heat exchanged for controlled heating of the first airflow and the second airflow respectively.

In one embodiment, the air conditioning system further comprises an air-distribution unit arranged in connection to the first airflow channel and the second airflow channel. The air-distribution unit is configured for directing the first airflow, the second airflow, and/or a mix of the first airflow and the second airflow, to the passenger compartment. The air-distribution unit is suitably arranged in connection to the passenger compartment for efficient distribution of one or more airflows into the passenger compartment. The air-distribution unit may be integrated into the housing structure, or alternatively be arranged as a separate unit connected to the housing structure.

In one embodiment, the heat exchanger unit is arranged as an air-to-air heat exchanger configured for heating the incoming ambient airflow by the fourth airflow.

In one embodiment, the first airflow channel comprises a recirculation flow inlet arranged upstream the first fan unit and the evaporator. The recirculation flow inlet is connected to the recirculation airflow channel, and the recirculation flow inlet is configured for directing the third airflow in the recirculation airflow channel to the first airflow channel. The third airflow entering the first airflow channel is in this way forming part of the first airflow. The recirculation flow inlet is enabling recirculation of air from the passenger compartment via the recirculation airflow channel. The recirculation airflow channel is used for directing the third airflow from the passenger compartment to the first airflow channel when there is a need for recirculating air from the passenger compartment, such as for example in situations when the air in the passenger compartment has reached a pre-defined temperature. When reaching the pre-defined temperature, the vehicle air conditioning system can switch to an air recuperation mode where air is recirculated from the passenger compartment to the first airflow channel via the third airflow in the recirculation airflow channel. The recirculation airflow channel may be arranged with a recirculation door unit for controlling the third airflow in the recirculation airflow channel. The recirculation door unit may have any suitable airflow control door or valve configuration, such as for example a butterfly valve, a gate valve, or a flap actuator.

The disclosure further concerns a vehicle comprising a vehicle air conditioning system as described above.

The disclosure further concerns a method for operating a vehicle air conditioning system for the treatment of air flowing to a vehicle passenger compartment. The air conditioning system comprises a housing structure extending between an air inlet and the passenger compartment. The housing structure is arranged with a first airflow channel adapted for directing a first airflow from the air inlet to the passenger compartment, and a second airflow channel adapted for directing a second airflow from the air inlet to the passenger compartment. A first fan unit configured for establishing the first airflow is arranged in the first airflow channel, and a second fan unit configured for establishing the second airflow is arranged in the second airflow channel. An evaporator configured for cooling the first airflow is arranged in the first airflow channel and a condenser configured for heating the second airflow is arranged in the second airflow channel. The air conditioning system comprises a recirculation airflow channel extending between the passenger compartment and the first airflow channel, adapted for directing a third airflow from the passenger compartment to the first airflow channel. The air conditioning system comprises an exhaust airflow channel extending between the first airflow channel and an airflow outlet, and the exhaust airflow channel is adapted for directing a fourth airflow from the first airflow channel to the ambient environment. The air conditioning system comprises a heat exchanger unit arranged at the housing structure in connection to the air inlet and connected to the exhaust airflow channel. The method comprises the steps: based on a detected environmental condition, directing at least a part of the first airflow in the first airflow channel to the exhaust airflow channel for establishing the fourth airflow, and heating an incoming ambient airflow into the housing structure at the air inlet in the heat exchanger unit by the fourth airflow.

Advantages with the method are that instead of dumping cold air from the first airflow channel, this cold air can based on the detected environmental condition be used for heating the incoming ambient airflow into the housing structure in the heat exchanger unit at the air inlet by the fourth airflow in the exhaust airflow channel. By recirculating air in the recirculation airflow channel from the passenger compartment to the first airflow channel, this heated recirculated air can be directed to the exhaust airflow channel for heating the incoming ambient airflow in the heat exchanger unit. This is also enabling fresh dry air from the ambient environment to enter the passenger compartment during recycling the air. By heating the incoming ambient airflow, the energy consumption can be lowered, and the heated incoming ambient airflow is reducing the problem with fogging on the inside of the windshield.

In one embodiment, the detected environmental condition is a temperature condition of the ambient environment. Based on the temperature condition of the ambient environment, the cold air from the first airflow channel can be used for heating the incoming ambient airflow, when the temperature of the incoming ambient air is lower than the cold air in the first airflow channel. This is an efficient way to make the air conditioning system more energy efficient during cold ambient temperatures, such as in cold winter conditions.

### BRIEF DESCRIPTION OF DRAWINGS

The disclosure will be described in detail in the following, with reference to the attached drawings, in which
- Fig. 1: shows schematically, in a system layout view, a vehicle air conditioning system for treating a flow of air to a vehicle passenger compartment,
- Fig. 2a-d: show schematically, in system layout views, a section of the vehicle air conditioning system with a first door unit and an exhaust door unit arranged in different operational modes, and
- Fig. 3a-b: show schematically, in system layout views, a section of the vehicle air conditioning system with a second door unit arranged in different operational modes.

### DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure.

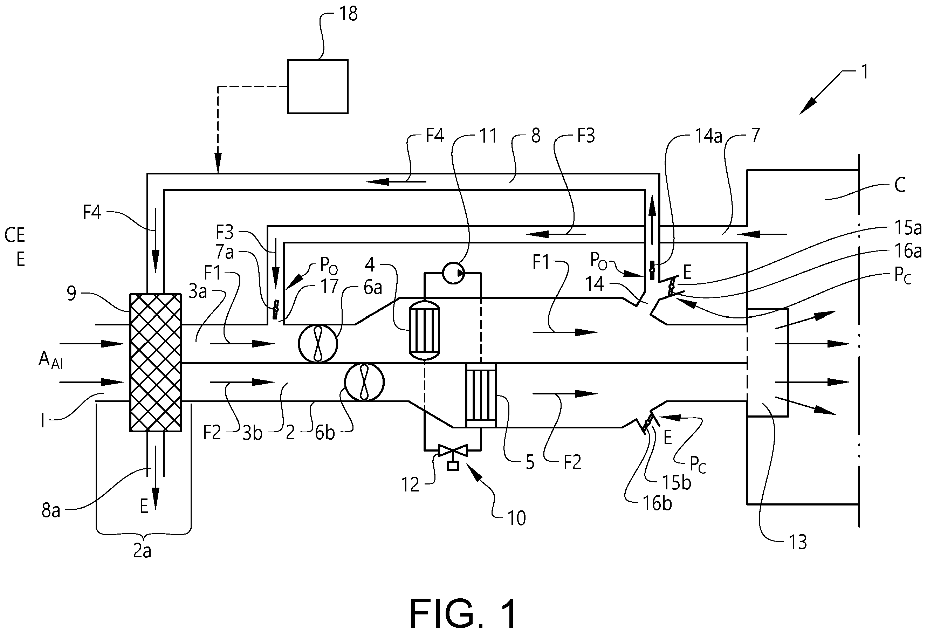

Figure 1 schematically shows a vehicle air conditioning system 1 that is used for treating a flow of air to a vehicle passenger compartment C. The air conditioning system 1 comprises a housing structure 2, and the housing structure 2 is extending between an air inlet I and the passenger compartment C. The air inlet I is allowing air from the ambient environment E to enter the vehicle air conditioning system 1. The housing structure 2 is arranged for guiding airflows, as well as enclosing and/or supporting different components of the air conditioning system 1. The housing structure 2 may be formed of different structural parts allowing for example the air inlet I to be arranged in a suitable position of the vehicle, and specific air intake ducts, air transporting ducts, or other air transporting structures may form part of the housing structure 2.

An incoming ambient airflow A_{AI} is entering the housing structure 2 via the air inlet I, as indicated with arrows in figure 1. The air conditioning system 1 further comprises an air-distribution unit 13 fluidly connected to the housing structure 2. The air-distribution unit 13 is suitably arranged in connection to the passenger compartment C for efficient distribution of one or more airflows into the passenger compartment C. Such an air-distribution unit 13 may be integrated into the housing structure 2, or alternatively be arranged as a separate unit connected to the housing structure 2.

The housing structure 2 is arranged with a first airflow channel 3a adapted for directing a first airflow F1 from the air inlet I to the passenger compartment C and a second airflow channel 3b adapted for directing a second airflow F2 from the air inlet I to the passenger compartment C, as shown in figure 1. The air inlet I is suitably arranged as an air inlet section 2a of the housing structure 2 common for the first airflow channel 3a and the second airflow channel 3b, where the air inlet I is configured for receiving the incoming ambient airflow A_{AI} from the ambient environment E. The air-distribution unit 13 is arranged in connection to the first airflow channel 3a and the second airflow channel 3b, and the air-distribution unit 13 is configured for directing the first airflow F1, the second airflow F2, and/or a mix of the first airflow F1 and the second airflow F2, to the passenger compartment C.

Air transported from the ambient environment E via the air inlet I to the first air flow channel 3a and the second air flow channel 3b may pass one or more air filters or similar arrangements before entering the respective first and second air flow channels. The air filter or air filters may for example be arranged in an engine compartment or other suitable compartment of the vehicle.

The first airflow channel 3a comprises a first fan unit 6a. The first fan unit 6a is arranged for establishing the first airflow F1 in the first airflow channel 3a, as understood from figure 1. An evaporator 4 is arranged in the first airflow channel 3a. The evaporator 4 is arranged as a heat exchanger in the first airflow channel 3a, and the evaporator 4 is configured for cooling the first airflow F1 in the first airflow channel 3a. The evaporator 4 may be of any type and construction suitable for vehicle applications.

The second airflow channel 3b comprises a second fan unit 6b. The second fan unit 6b is arranged for establishing the second airflow F2 in the second airflow channel 3b, as understood from figure 1. A condenser 5 is arranged in the second airflow channel 3b. The condenser 5 is arranged as a heat exchanger in the second airflow channel 3b, and the condenser 5 is configured for heating the second airflow F2 in the second airflow channel 3b. The condenser 5 may be of any type and construction suitable for vehicle applications.

Air from the ambient environment E is in this way transported by the first fan unit 6a to the first airflow channel 3a and by the second fan unit 6b to the second airflow channel 3b for establishing the first flow of air F1 and the second flow of air F2 in the housing structure 2.

The first fan unit 6a and the second fan unit 6b may be operated individually for controlling the first airflow F1 and the second airflow F2 respectively. Through individual operation of the fan units, the air speeds of the first airflow F1 and the second airflow F2 can differ for an optimal operation of the air conditioning system 1. With different air speeds from the first fan unit 6a and the second fan unit 6b, the distribution of cold air from the first airflow F1 in the first air flow channel 3a and hot air from the second airflow F2 in the second air flow channel 3b can be varied for a suitable mix of cold and hot air to the passenger compartment C. It should be understood that the first airflow F1 from the first airflow channel 3a and the second airflow F2 from the second airflow channel 3b may vary depending of the air flow speed from the first fan unit 6a and the second fan unit 6b.

In non-illustrated embodiments, a first air filter may be arranged in the first airflow channel 3a upstream the evaporator 4, and a second air filter may be arranged in the second airflow channel 3b upstream the condenser 5. In alternative embodiments, the air filters may be arranged in other locations of the air conditioning system.

As illustrated in figure 1, the air conditioning system 1 further comprises a refrigerant circuit 10. The evaporator 4 and the condenser 5 are integrated into the refrigerant circuit 10. The refrigerant circuit 10 further comprises a compressor 11 and an expansion valve 12. The refrigerant circuit 10 may be of any appropriate design with a refrigerant suitable for vehicle applications. The different components are connected to each other with conduits or similar arrangements. The refrigerant circuit 10 illustrated in figure 1 is only schematically shown with the main components of the system.

The refrigerant circuit 10 may in other embodiments further comprise other components for an efficient operation of the air conditioning system 1, such as for example one or more control valves, accumulating tanks, mufflers, sensors, connectors, and additional heat exchangers. In an alternative non-illustrated embodiment, the refrigerant circuit 10 may further comprise a water cooled condenser arranged upstream the condenser 5, and a chiller arranged downstream the condenser 5 in parallel with the evaporator 4. Two expansion valves may be arranged upstream the evaporator 4 and the chiller.

Air may if desired be circulated from the passenger compartment C to the first air flow channel 3a, and the air conditioning system 1 comprises a recirculation airflow channel 7 for this purpose, as shown in figure 1. The recirculation airflow channel 7 may have any suitable configuration, such as an air transporting duct, or other air transporting structure, arranged between the passenger compartment C and the first airflow channel 3a. The recirculation airflow channel 7 is extending between the passenger compartment C and the first airflow channel 3a, and the recirculation airflow channel 7 is entering the first airflow channel 3a in a position upstream the first fan unit 6a. The first airflow channel 3a comprises a recirculation flow inlet 17 arranged upstream the first fan unit 6a and the evaporator 4, and the recirculation flow inlet 17 is connected to the recirculation airflow channel 7. The recirculation airflow channel 7 is used for directing a third airflow F3 from the passenger compartment C to the first airflow channel 3a when there is a need for recirculating air from the passenger compartment C, such as for example in situations when the air in the passenger compartment C has reached a pre-defined temperature. When reaching the pre-defined temperature, the air conditioning system 1 can switch to an air recuperation mode where air is recirculated from the passenger compartment C to the first airflow channel 3a via the third airflow F3 in the recirculation airflow channel 7. The recirculation flow inlet 17 is configured for directing the third airflow F3 in the recirculation airflow channel 7 to the first airflow channel 3a, and the third airflow F3 entering the first airflow channel 3a is forming part of the first airflow F1. In the first airflow channel 3a the recirculated air forming part of the first airflow F1 is transported through the evaporator 4, where the energy in the recirculated air from the third airflow F3 is transferred to the refrigerant circuit 10. The recirculation airflow channel 7 is suitably arranged with a recirculation door unit 7a for controlling the third airflow F3. The recirculation door unit 7a may have any suitable airflow control door or valve configuration, such as for example a butterfly valve, a gate valve, or a flap actuator. In figure 1, the recirculation door unit 7a is for illustrative purposes shown in an open position Po enabling air in the the passenger compartment C to enter the the recirculation airflow channel 7 for establishing the third airflow F3. The recirculation door unit 7a may also be arranged in a non-illustrated closed position preventing air in the the passenger compartment C from entering the the recirculation airflow channel 7.

The air conditioning system 1 comprises an exhaust airflow channel 8, as shown in figure 1. The exhaust airflow channel 8 may have any suitable configuration, such as an air transporting duct, or other air transporting structure, extending from the first airflow channel 3a. The exhaust airflow channel 8 is extending between the first airflow channel 3a and an airflow outlet 8a for directing or distributing a fourth airflow F4 from the first airflow channel 3a to the ambient environment E.

The air conditioning system 1 further comprises a heat exchanger unit 9 arranged at the housing structure 2 in connection to the air inlet I. The heat exchanger unit 9 is arranged as an air-to-air heat exchanger that is heating the incoming ambient airflow A_{AI} by the fourth airflow F4. The heat exchanger unit 9 is fluidly connected to the housing structure 2 and fluidly connected to the exhaust airflow channel 8. In the shown embodiment, the heat exchanger unit 9 is connected to the housing structure 2 at the air inlet I and connected to exhaust airflow channel 8 at the airflow outlet 8a. The heat exchanger unit 9 may have any suitable air-to-air heat exchanger configuration suitable for heating the incoming ambient airflow A_{AI} flowing into the housing structure 2 at the air inlet I by the fourth airflow F4. The incoming ambient airflow A_{AI} is thus flowing through the heat exchanger unit 9 before entering the first airflow channel 3a and the second airflow channel 3b, and the fourth airflow F4 is flowing through the heat exchanger unit 9 before reaching the airflow outlet 8a. In this way, the incoming ambient airflow A_{AI} can be efficiently heated by the fourth airflow F4 in the heat exchanger unit 9.

The first airflow channel 3a comprises an exhaust flow outlet 14 arranged downstream the evaporator 4, and the exhaust flow outlet 14 is connected to the exhaust airflow channel 8, as understood from figure 1. The exhaust flow outlet 14 is arranged for directing at least a part of the first airflow F1 in the first airflow channel 3a to the exhaust airflow channel 8 for establishing the fourth airflow F4. The exhaust flow outlet 14 suitably comprises an exhaust door unit 14a for controlling the airflow from the first airflow channel 3a to the exhaust airflow channel 8. The exhaust door unit 14a is thus used for controlling the fourth airflow F4 in the exhaust airflow channel 8. The exhaust door unit 14a may have any suitable airflow control door or valve configuration, such as for example a butterfly valve, a gate valve, or a flap actuator. In figure 1, the exhaust door unit 14a is for illustrative purposes shown in an open position Po enabling air in the first airflow channel 3a to enter the the exhaust airflow channel 8.

In other non-illustrated embodiments, the exhaust door unit 14a may instead be arranged in other positions in the exhaust flow outlet 14 or exhaust airflow channel 8 for controlling the fourth airflow F4.

As shown in figure 1, the first airflow channel 3a may comprise a first outlet flow port 15a arranged downstream the evaporator 4, enabling different climate options of the air conditioning system 1 with the possibility to dump air to the ambient environment E from the first airflow channel 3a. The first outlet flow port 15a is configured for directing at least a part of the first airflow F1 to the ambient environment E if desired, such as when hot air is generated by the air conditioning system 1 to the passenger compartment C and cold air in the first airflow F1 needs to be dumped to the ambient environment E. Suitably, the first outlet flow port 15a comprises a first door unit 16a for controlling the airflow from the first airflow channel 3a to the ambient environment E. The first door unit 16a may have any suitable airflow control door or valve configuration, such as for example a butterfly valve, a gate valve, or a flap actuator. In figure 1, the first door unit 16a is for illustrative purposes shown in a closed position P_{C} preventing air in the first airflow channel 3a from being dumped to the ambient environment E.

In the illustrated embodiment, the exhaust flow outlet 14 and the first outlet flow port 15a are arranged in connection to each other and fluidly connected with the first airflow channel 3a. In other non-illustrated embodiments, the exhaust flow outlet 14 and the first outlet flow port 15a may instead be separated from each other.

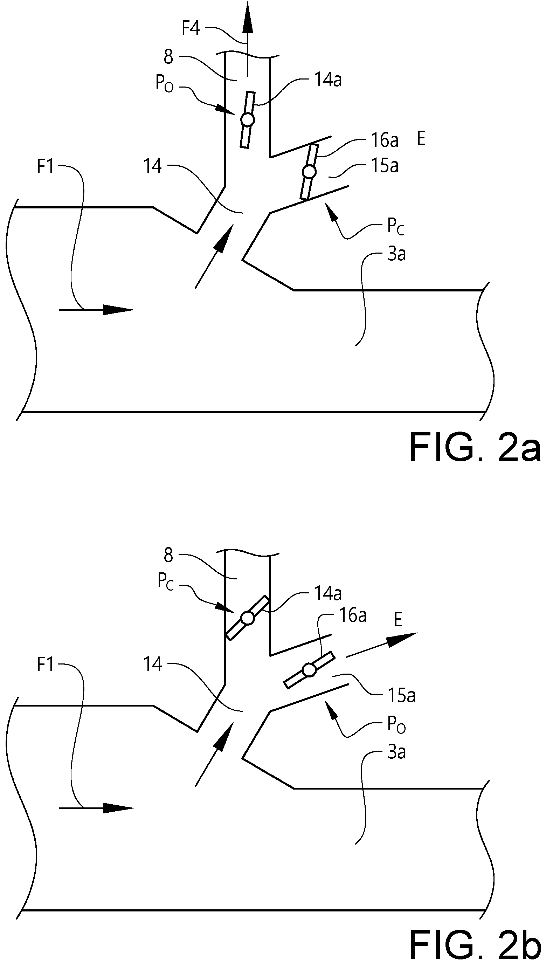

The configuration of the air conditioning system 1 with the exhaust flow outlet 14 and the first outlet flow port 15a is enabling different operational modes, as schematically illustrated in figures 2a-d.

In figure 2a, the exhaust door unit 14a is arranged in an open position Po and the first door unit 16a is arranged in a closed position P_{C}. With these door positions, a part of the first airflow F1 in the first airflow channel 3a is directed to the exhaust airflow channel 8 via the exhaust flow outlet 14 for establishing the fourth airflow F4, and the first airflow F1 in the first airflow channel 3a is prevented from being dumped to the ambient environment E via the first outlet flow port 15a.

In figure 2b, the exhaust door unit 14a is arranged in a closed position Pc and the first door unit 16a is arranged in an open position Po. With these door positions, at least a part of the first airflow F1 in the first airflow channel 3a is dumped to the ambient environment E via the first outlet flow port 15a, and the first airflow F1 in the first airflow channel 3a is prevented from being directed to the exhaust airflow channel 8 via the exhaust flow outlet 14. In this operational mode, the fourth airflow F4 is not established.

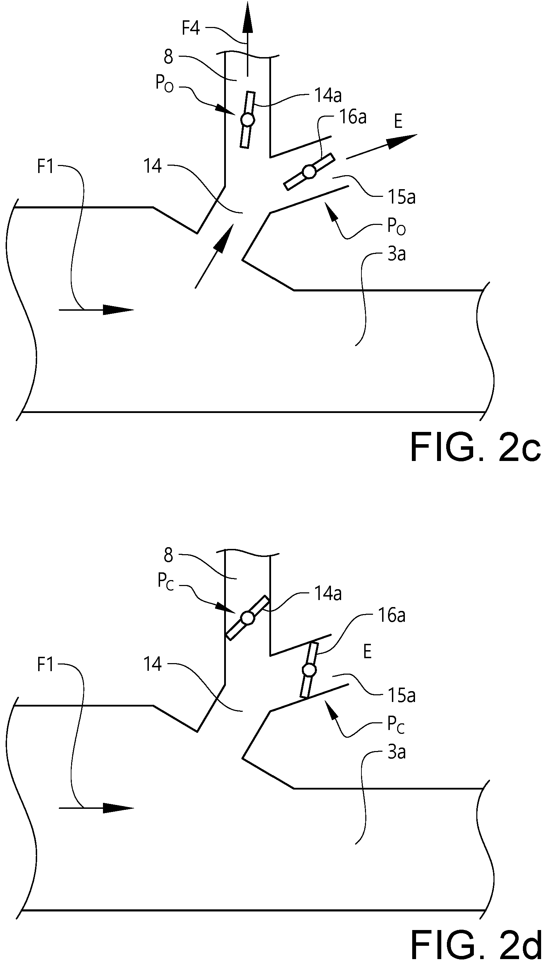

In figure 2c, the exhaust door unit 14a is arranged in an open position Po and the first door unit 16a is arranged in an open position P_{O}. With these door positions, a part of the first airflow F1 in the first airflow channel 3a is directed to the exhaust airflow channel 8 via the exhaust flow outlet 14 for establishing the fourth airflow F4, and a part of the first airflow F1 in the first airflow channel 3a is dumped to the ambient environment E via the first outlet flow port 15a.

In figure 2d, the exhaust door unit 14a is arranged in a closed position Pc and the first door unit 16a is arranged in a closed position Pc. With these door positions, the first airflow F1 in the first airflow channel 3a is prevented from being directed to the exhaust airflow channel 8 via the exhaust flow outlet 14 and prevented from being dumped to the ambient environment E via the first outlet flow port 15a.

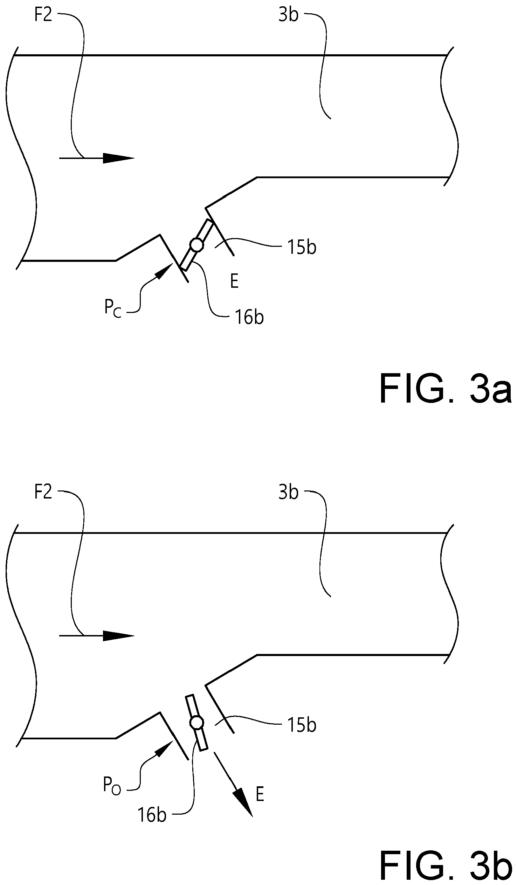

As shown in figure 1, the second airflow channel 3b may comprise a second outlet flow port 15b arranged downstream the condenser 5, enabling different climate options of the air conditioning system 1 with the possibility to dump air to the ambient environment E from the second airflow channel 3b. The second outlet flow port 15b is configured for directing at least a part of the second airflow F2 to the ambient environment E if desired, such as when cold air is generated by the air conditioning system 1 to the passenger compartment C and hot air in the second airflow needs to be dumped to the ambient environment E. Suitably, the second outlet flow port 15b comprises a second door unit 16b configured for controlling the airflow from the second airflow channel 3b to the ambient environment E. The second door unit 16b may have any suitable airflow control door or valve configuration, such as for example a butterfly valve, a gate valve, or a flap actuator. In figures 1 and 3a, the second door unit 16b is for illustrative purposes shown in a closed position Pc preventing the second airflow F2 in the second airflow channel 3b from being dumped to the ambient environment E via the second outlet flow port 15b. In figure 3b, the second door unit 16b is shown in an open position Po. In the open position Po, at least a part of the second airflow F2 in the second airflow channel 3b is dumped to the ambient environment E via the second outlet flow port 15b.

The air conditioning system 1 may further comprise a control unit 18 arranged for controlling the different components of the air conditioning system 1, such as for example air flow speeds via the fan units, air temperatures from the heat exchangers and door unit positions, as well as the operation of the air conditioning system 1 in different system operational modes. The control unit 18 is connected to the air conditioning system 1 and may form part of other vehicle control systems. The control unit 18 may comprise suitable software and one or more processors, as well as hardware components for controlling the air conditioning system 1. The control unit 18 may further be connected to one or more suitable sensors arranged in the passenger compartment C or in other positions of the vehicle for detecting environmental conditions and other conditions, such as for example temperatures, air humidity, exposure to sunlight, movements in the passenger compartment, fan speeds, and air flow velocities.

When operating the air conditioning system 1, the control unit 18 is collecting information from the different sensors, and based upon detected environmental conditions CE, the airflows of the air conditioning system 1 are controlled by arranging the door units into different operational positions and by operating the fan units.

The detected environmental condition CE may be a temperature condition of the ambient environment E. When the temperature of the incoming ambient air A_{AI} is lower than the temperature of the first airflow F1 in the first airflow channel 3a downstream the evaporator 4, the first airflow F1 air can be directed into the exhaust airflow channel 8 for establishing the fourth airflow F4, where the fourth airflow F4 is used in the heat exchanger unit 9 for heating the incoming ambient airflow A_{AI} entering the housing structure 2.

Based on a detected environmental condition CE, at least a part of the first airflow F1 in the first airflow channel 3a is directed to the exhaust airflow channel 8 for establishing the fourth airflow F4. The fourth airflow F4 is in this way heating the incoming ambient airflow A_{AI} into the housing structure 2 at the air inlet I in the heat exchanger unit 9. The fourth airflow F4 is established by arranging the exhaust door unit 14a in the open position Po, as described above and shown in for example figure 1.

Thus, instead of dumping cold air in the first airflow F1 to the ambient environment E, at least a part of the first airflow F1 is directed into the exhaust airflow channel 8 for establishing the fourth airflow F4, where the fourth airflow F4 is used in the heat exchanger unit 9 for heating the incoming ambient airflow A_{AI}. This is an efficient way to make the air conditioning system 1 more energy efficient during cold ambient temperatures, such as in cold winter conditions.

By recirculating heated air in the recirculation airflow channel 7 through the third airflow F3 from the passenger compartment C to the first airflow channel 3a, this heated recirculated air is used for heating the incoming ambient airflow A_{AI} in the heat exchanger unit 9. The recirculation of heated air in the recirculation airflow channel 7 through the third airflow F3 is also enabling fresh dry air from the ambient environment E to enter the passenger compartment C. By heating the incoming ambient airflow, the energy consumption can be lowered, and the heated incoming ambient airflow is reducing the problem with fogging on the inside of the windshield when entering the passenger compartment. The third airflow F3 is established by arranging the recirculation door unit 7a in the open position Po, as described above and shown in for example figure 1.

It will be appreciated that the above description is merely exemplary in nature and is not intended to limit the present disclosure, its application or uses. While specific examples have been described in the specification and illustrated in the drawings, it will be understood by those of ordinary skill in the art that various changes may be made and equivalents may be substituted for elements thereof without departing from the scope of the present disclosure as defined in the claims. Furthermore, modifications may be made to adapt a particular situation or material to the teachings of the present disclosure without departing from the essential scope thereof. Therefore, it is intended that the present disclosure not be limited to the particular examples illustrated by the drawings and described in the specification as the best mode presently contemplated for carrying out the teachings of the present disclosure, but that the scope of the present disclosure will include any embodiments falling within the foregoing description and the appended claims. Reference signs mentioned in the claims should not be seen as limiting the extent of the matter protected by the claims, and their sole function is to make claims easier to understand.

### REFERENCE SIGNS

- 1:: Air conditioning system
- 2:: Housing structure
- 2a:: Air inlet section
- 3a:: First airflow channel
- 3b:: Second airflow channel
- 4:: Evaporator
- 5:: Condenser
- 6a:: First fan unit
- 6b:: Second fan unit
- 7:: Recirculation airflow channel
- 7a:: Recirculation door unit
- 8:: Exhaust airflow channel
- 8a:: Airflow outlet, Exhaust airflow channel
- 9:: Heat exchanger unit
- 10:: Refrigerant circuit
- 11:: Compressor
- 12:: Expansion valve
- 13:: Air-distribution unit
- 14:: Exhaust flow outlet
- 14a:: Exhaust door unit
- 15a:: First outlet flow port
- 15b:: Second outlet flow port
- 16a:: First door unit
- 16b:: Second door unit
- 17:: Recirculation flow inlet
- 18:: Control unit

- A_{AI} :: Incoming ambient airflow
- C:: Passenger compartment
- CE:: Environmental condition
- E:: Ambient environment
- F1:: First airflow
- F2:: Second airflow
- F3:: Third airflow
- F4:: Fourth airflow
- I:: Air inlet
- Pc:: Closed position
- Po:: Open position

## Claims

1. A vehicle air conditioning system (1) treating air flowing to a vehicle passenger compartment (C), wherein the air conditioning system (1) comprises a housing structure (2) extending between an air inlet (I) and the passenger compartment (C), wherein the housing structure (2) is arranged with a first airflow channel (3a) adapted for directing a first airflow (F1) from the air inlet (I) to the passenger compartment (C) and a second airflow channel (3b) adapted for directing a second airflow (F2) from the air inlet (I) to the passenger compartment (C),
wherein a first fan unit (6a) configured for establishing the first airflow (F1) is arranged in the first airflow channel (3a), and a second fan unit (6b) configured for establishing the second airflow (F2) is arranged in the second airflow channel (3b),
wherein an evaporator (4) configured for cooling the first airflow (F1) is arranged in the first airflow channel (3a) and a condenser (5) configured for heating the second airflow (F2) is arranged in the second airflow channel (3b),
wherein the air conditioning system (1) comprises a recirculation airflow channel (7) extending between the passenger compartment (C) and the first airflow channel (3a), wherein the recirculation airflow channel (7) is adapted for directing a third airflow (F3) from the passenger compartment (C) to the first airflow channel (3a),
wherein the air conditioning system (1) comprises an exhaust airflow channel (8) extending between the first airflow channel (3a) and an airflow outlet (8a), wherein the exhaust airflow channel (8) is adapted for directing a fourth airflow (F4) from the first airflow channel (3a) to the ambient environment (E),
wherein the air conditioning system (1) comprises a heat exchanger unit (9) arranged at the housing structure (2) in connection to the air inlet (I) and connected to the exhaust airflow channel (8), wherein the heat exchanger unit (9) is configured for heating an incoming ambient airflow (A_{AI}) into the housing structure (2) at the air inlet (I) by the fourth airflow (F4).

2. The vehicle air conditioning system (1) according to claim 1,
wherein the first airflow channel (3a) comprises an exhaust flow outlet (14) arranged downstream the evaporator (4), wherein the exhaust flow outlet (14) is connected to the exhaust airflow channel (8), wherein the exhaust flow outlet (14) is configured for directing at least a part of the first airflow (F1) in the first airflow channel (3a) to the exhaust airflow channel (8) for establishing the fourth airflow (F4).

3. The vehicle air conditioning system (1) according to claim 2,
wherein the exhaust flow outlet (14) comprises an exhaust door unit (14a) configured for controlling the airflow from the first airflow channel (3a) to the exhaust airflow channel (8).

4. The vehicle air conditioning system (1) according to any preceding claim,
wherein the first airflow channel (3a) comprises a first outlet flow port (15a) arranged downstream the evaporator (4), wherein the first outlet flow port (15a) is configured for directing at least a part of the first airflow (F1) to the ambient environment (E).

5. The vehicle air conditioning system (1) according to claim 4,
wherein the first outlet flow port (15a) comprises a first door unit (16a) configured for controlling the airflow from the first airflow channel (3a) to the ambient environment (E).

6. The vehicle air conditioning system (1) according to claim 2 or 3, and claim 4 or 5,
wherein the exhaust flow outlet (14) and the first outlet flow port (15a) are arranged in connection to each other in the first airflow channel (3a).

7. The vehicle air conditioning system (1) according to any preceding claim,
wherein the second airflow channel (3b) comprises a second outlet flow port (15b) arranged downstream the condenser (5), wherein the second outlet flow port (15b) is configured for directing at least a part of the second airflow (F2) to the ambient environment (E).

8. The vehicle air conditioning system (1) according to claim 7,
wherein the second outlet flow port (15b) comprises a second door unit (16b) configured for controlling the airflow from the second airflow channel (3b) to the ambient environment (E).

9. The vehicle air conditioning system (1) according to any preceding claim,
wherein the air conditioning system (1) further comprises a refrigerant circuit (10), wherein the evaporator (4) and the condenser (5) are integrated into the refrigerant circuit (10), wherein the refrigerant circuit (10) further comprises a compressor (11) and an expansion valve (12).

10. The vehicle air conditioning system (1) according to any preceding claim,
wherein the air inlet (I) is arranged as an air inlet section (2a) of the housing structure (2) common for the first airflow channel (3a) and the second airflow channel (3b), wherein the air inlet (I) is configured for receiving the incoming ambient airflow (A_{AI}) from the ambient environment (E).

11. The vehicle air conditioning system (1) according to any preceding claim,
wherein the air conditioning system (1) further comprises an air-distribution unit (13) arranged in connection to the first airflow channel (3a) and the second airflow channel (3b), wherein the air-distribution unit (13) is configured for directing the first airflow (F1), the second airflow (F2), and/or a mix of the first airflow (F1) and the second airflow (F2), to the passenger compartment (C).

12. The vehicle air conditioning system (1) according to any preceding claim,
wherein the heat exchanger unit (9) is arranged as an air-to-air heat exchanger configured for heating the incoming ambient airflow (A_{AI}) by the fourth airflow (F4).

13. The vehicle air conditioning system (1) according to any preceding claim,
wherein the first airflow channel (3a) comprises a recirculation flow inlet (17) arranged upstream the first fan unit (6a) and the evaporator (4), wherein the recirculation flow inlet (17) is connected to the recirculation airflow channel (7), wherein the recirculation flow inlet (17) is configured for directing the third airflow (F3) in the recirculation airflow channel (7) to the first airflow channel (3a), wherein the third airflow (F3) entering the first airflow channel (3a) is forming part of the first airflow (F1).

14. A vehicle comprising a vehicle air conditioning system (1) according to any of claims 1 to 13.

15. A method for operating a vehicle air conditioning system (1) for the treatment of air flowing to a vehicle passenger compartment (C), wherein the air conditioning system (1) comprises a housing structure (2) extending between an air inlet (I) and the passenger compartment (C), wherein the housing structure (2) is arranged with a first airflow channel (3a) adapted for directing a first airflow (F1) from the air inlet (I) to the passenger compartment (C) and a second airflow channel (3b) adapted for directing a second airflow (F2) from the air inlet (I) to the passenger compartment (C),
wherein a first fan unit (6a) configured for establishing the first airflow (F1) is arranged in the first airflow channel (3a), and a second fan unit (6b) configured for establishing the second airflow (F2) is arranged in the second airflow channel (3b),
wherein an evaporator (4) configured for cooling the first airflow (F1) is arranged in the first airflow channel (3a) and a condenser (5) configured for heating the second airflow (F2) is arranged in the second airflow channel (3b),
wherein the air conditioning system (1) comprises a recirculation airflow channel (7) extending between the passenger compartment (C) and the first airflow channel (3a), wherein the recirculation airflow channel (7) is adapted for directing a third airflow (F3) from the passenger compartment (C) to the first airflow channel (3a),
wherein the air conditioning system (1) comprises an exhaust airflow channel (8) extending between the first airflow channel (3a) and an airflow outlet (8a), wherein the exhaust airflow channel (8) is adapted for directing a fourth airflow (F4) from the first airflow channel (3a) to the ambient environment (E),
wherein the air conditioning system (1) comprises a heat exchanger unit (9) arranged at the housing structure (2) in connection to the air inlet (I) and connected to the exhaust airflow channel (8), wherein the method comprises the steps:
based on a detected environmental condition (CE) directing at least a part of the first airflow (F1) in the first airflow channel (3a) to the exhaust airflow channel (8) for establishing the fourth airflow (F4), and heating an incoming ambient airflow (A_{AI}) into the housing structure (2) at the air inlet (I) in the heat exchanger unit (9) by the fourth airflow (F4).

16. The method according to claim 15,
wherein the detected environmental condition (CE) is a temperature condition of the ambient environment (E).
